# EUROPÄISCHE PATENTSCHRIFT

(11) **EP 4 019 736 B1**
(45) Veröffentlichungstag und Bekanntmachung des Hinweises auf die Patenterteilung: **17.04.2024**
(21) Anmeldenummer: 20216440.6
(22) Anmeldetag: 22.12.2020
(51) Int. Cl.: E06B 11/08, F16H 35/02

(54) **GETRIEBEVORRICHTUNG EINER DURCHGANGSVORRICHTUNG**
TRANSMISSION DEVICE OF A PASS-THROUGH DEVICE
DISPOSITIF D'ENGRENAGE D'UN DISPOSITIF DE PASSAGE

(43) Veröffentlichungstag der Anmeldung: 29.06.2022
(73) Patentinhaber: dormakaba Deutschland GmbH, 58256 Ennepetal (DE)
(72) Erfinder: Eichner, Harald, 77963 Schwanau-Ottenheim (DE)
(74) Vertreter: Balder IP Law, S.L.

(56) Entgegenhaltungen:
- WO-A1-2018/020279
- DE-A1-102005 028 712
- FR-A1- 2 443 575

## Beschreibung

Die Erfindung betrifft die Verwendung einer Getriebevorrichtung zum diskontinuierlichen Bewegen von zwei Elementen in einer Durchgangsvorrichtung. Die Erfindung betrifft des Weiteren eine Drehsperre und ein Drehkreuz.

Hier betrachtete Durchgangsvorrichtungen sind beispielsweise Drehsperren oder Drehkreuze. Diese Drehsperren oder Drehkreuze werden zur Zutrittskontrolle und/oder zur Vereinzelung von Personen verwendet. Dabei werden die Sperrelemente, beispielsweise ausgebildet als Sperrholme der Drehsperre oder Flügel des Drehkreuzes, beim Durchgang einer Person bewegt, so dass sich im Regelfall vor der durchgehenden Person ein Sperrelement und hinter der durchgehenden Person ein Sperrelement befindet. Eine beispielhafte Drehsperre zeigt EP 2 011 956 B1.

WO 2018/020279 A1 und die FR 2 443 575 A1 offenbaren jeweils eine Verbrennungskraftmaschine mit einer Getriebevorrichtung zum diskontinuierlichen Bewegen von zwei Hubkolben.

Die DE 10 2005 028712 A1 offenbart eine Durchgangssperre.

Es ist Aufgabe vorliegender Erfindung, eine alternative Verwendung einer Getriebevorrichtung sowie alternative Durchgangsvorrichtungen vorzuschlagen.

Die Lösung der Aufgabe erfolgt durch die Merkmale der unabhängigen Ansprüche. Die abhängigen Ansprüche haben vorteilhafte Ausgestaltungen zum Gegenstand.

Eine Durchgangsvorrichtung kann insbesondere als Drehsperre oder Drehkreuz ausgebildet sein. Die Drehsperre weist üblicherweise Sperrholme auf, die die Sperrelemente bilden. Zwei oder drei Sperrholme drehen dabei um eine vertikale oder zur Vertikalen geneigte, gemeinsame Drehachse (Abtriebsachse), um dadurch den Zutritt zu kontrollieren bzw. die zutretenden Personen zu vereinzeln. Bei dem Drehkreuz sind die Sperrelemente als Flügel des Drehkreuzes ausgebildet, wobei die gemeinsame Drehachse (Abtriebsachse) vertikal steht. Das Drehkreuz kann die grundsätzliche Erscheinung einer Karusselltür aufweisen und/oder in erster Linie zur Zutrittskontrolle und/oder Vereinzelung dienen.

Des Weiteren kann die Durchgangsvorrichtung auch eine Tür, insbesondere Karusselltür oder Drehtür, sein, wobei die zumindest zwei diskontinuierlich zu bewegenden Elemente bei dieser Ausgestaltung durch die Flügel der Karusselltür bzw. die Flügel der mehrflügeligen Drehtür gebildet sind.

Die in den unabhängigen Ansprüchen als ein Merkmal des beanspruchten Gegenstands genannte Getriebevorrichtung weist eine Antriebsachse auf. Die Antriebsachse kann grundsätzlich beliebig gebildet werden und ist beispielsweise die Nabe eines Zahnrades (Antriebsrad), eine Welle oder ein sonstiger, in einem Gehäuse der Getriebevorrichtung drehbar angeordneter Bestandteil.

Des Weiteren weist diese Getriebevorrichtung eine erste Wirkdrehachse und eine zweite Wirkdrehachse auf. Bei den Wirkdrehachsen handelt es sich, genauso wie bei der Antriebsachse, um gegenständliche Elemente der Getriebevorrichtung, die beispielsweise durch die Naben zugehöriger Zahnräder (Drehachsenrad) oder entsprechende Wellen gebildet sind. Auch diese Wirkdrehachsen sind vorzugsweise im Gehäuse der Getriebevorrichtung drehbeweglich gelagert.

Die erste Wirkdrehachse ist dazu ausgebildet, mit dem ersten Element, insbesondere dem ersten Sperrelement, drehmomentübertragend in Wirkverbindung zu stehen. Zwischen der ersten Wirkdrehachse und der Antriebsachse befindet sich eine erste, ungleichmäßig übersetzende Getriebestufe. Insbesondere kann vorgesehen sein, dass die erste Wirkdrehachse sowohl mit der Antriebsachse als auch mit dem ersten Element drehmomentübertragend zwangsverbunden ist.

Zwangsverbunden bedeutet, dass die entsprechenden Bauteile stets gleichzeitig rotieren und nicht voneinander entkoppelt werden können.

Die zweite Wirkdrehachse ist dazu ausgebildet, mit dem zweiten Element, insbesondere dem zweiten Sperrelement, drehmomentübertragend in Wirkverbindung zu stehen. Zwischen der zweiten Wirkdrehachse und der Antriebsachse befindet sich eine zweite, ungleichmäßig übersetzende Getriebestufe. Insbesondere kann vorgesehen sein, dass die zweite Wirkdrehachse sowohl mit der Antriebsachse als auch mit dem zweiten Element drehmomentübertragend zwangsverbunden ist.

Die erste und zweite Getriebestufe kann insbesondere derart ausgebildet sein, dass die beiden Wirkdrehachsen mit der Antriebsachse zwangsverbunden sind. Daraus ergibt sich, dass bei einer Drehung der Antriebsachse stets beide Wirkdrehachsen und somit auch stets beide diskontinuierlich zu bewegenden Elemente in Rotation versetzt werden. Somit wären auch die beiden diskontinuierlich zu bewegenden Elemente zwangsverbunden.

Auch bei einem Antrieb über eines der beiden Elemente (z.B. erstes Element), wenn beispielsweise eine Person gegen das Sperrelement drückt, führt dies zwangsläufig zu einer Drehung der Antriebsachse und somit auch zu einer Drehung der anderen Wirkdrehachse (z.B. zweite Wirkdrehachse), die wiederum das andere Element (z.B. zweites Element) zwangsläufig in Rotation versetzt.

Die Verbindung der beiden Wirkdrehachsen über die Antriebsachse und die beiden ungleichmäßig übersetzenden Getriebestufen führen dazu, dass die beiden Elemente, insbesondere Sperrelemente, sich gleichzeitig bewegen; allerdings mit unterschiedlicher Geschwindigkeit. Insbesondere kann beispielsweise das erste Element, das sich vor der durchgehenden Person befindet, zunächst langsamer laufen als das zweite Element, das sich von hinten der Person nähert. Dadurch schließt das zweite Element relativ schnell die Lücke hinter der Person. Somit kann vermieden werden, dass eine zweite Person gleichzeitig mit der ersten Person zwischen den beiden Elementen die Durchgangsvorrichtung passiert.

Die erste Getriebestufe weist einen ersten Übersetzungsverlauf auf. Die zweite Getriebestufe weist einen zweiten Übersetzungsverlauf auf. Der jeweilige Übersetzungsverlauf ist definiert als das Übersetzungsverhältnis über dem Drehwinkel der Antriebsachse. Die beiden Übersetzungsverläufe der beiden Getriebestufen können gleich ausgestaltet sein.

Insbesondere kann vorgesehen sein, dass der erste Übersetzungsverlauf und/oder der zweite Übersetzungsverlauf so ausgebildet sind, dass sich das jeweilige Übersetzungsverhältnis bei einer vollständigen Umdrehung der Antriebsachse kontinuierlich ändert.

Bevorzugt ist vorgesehen, dass der erste Übersetzungsverlauf der ersten Getriebestufe und der zweite Übersetzungsverlauf der zweiten Getriebestufe gleich, aber versetzt zueinander sind. Dieser Versatz bezieht sich insbesondere auf den Drehwinkel der Antriebsachse. Beispielsweise beträgt der Versatz vorzugsweise 180°. Dies bedeutet, dass ein bestimmtes Übersetzungsverhältnis der ersten Getriebestufe nach einer Drehung der Antriebsachse um 180° demselben Übersetzungsverhältnis an der zweiten Getriebestufe entspricht und umgekehrt.

Alternativ ist bevorzugt vorgesehen, dass die beiden Übersetzungsverläufe um 330° oder 300° oder 270° oder 240° oder 210° oder 150° oder 120° oder 90° oder 60° versetzt sind.

Grundsätzlich kann die Getriebevorrichtung zusätzlich zu der ersten und zweiten Wirkdrehachse weitere Wirkdrehachsen aufweisen. Insbesondere kann jede Wirkdrehachse mit einer eigenen Getriebestufe, die ungleichmäßig übersetzt, mit der Antriebsachse verbunden sein. Insbesondere kann vorgesehen sein, dass eine dritte Wirkdrehachse vorgesehen ist, deren dritter Übersetzungsverlauf gegenüber dem ersten Übersetzungsverlauf und/oder dem zweiten Übersetzungsverlauf um 30° oder 60° oder 90° oder 120° versetzt ist.

Alternativ zur Verwendung gleicher Übersetzungsverläufe können auch die beiden Übersetzungsverläufe der ersten und zweiten Getriebestufe unterschiedlich sein.

Unter einer drehmomentübertragenden Wirkverbindung ist insbesondere zu verstehen, dass die Elemente zur Übertragung eines Drehmoments in Wirkverbindung stehen. Insbesondere kann dies erreicht werden, indem zwei Zahnräder miteinander im Eingriff stehen oder zwei Reibräder aneinander reiben. Dementsprechend können die im Folgenden beschriebenen Räder stets als Zahnräder oder Reibräder ausgebildet sein.

Bevorzugt ist vorgesehen, dass auf der Antriebsachse ein Antriebsrad angeordnet ist. Bei dem Antriebsrad kann es sich insbesondere um ein Zahnrad handeln.

Des Weiteren ist bevorzugt vorgesehen, dass auf der ersten Wirkdrehachse ein erstes Drehachsenrad angeordnet ist, das zur Bildung der ersten Getriebestufe mit dem Antriebsrad in drehmomentübertragender Wirkverbindung steht. Bei dem ersten Drehachsenrad handelt es sich vorzugsweise um ein Zahnrad, auch bezeichnet als Drehachsen-Zahnrad. Dementsprechend steht dieses Zahnrad vorzugsweise mit dem Antriebsrad in Eingriff. Alternativ kann das erste Drehachsenrad beispielsweise auch als Reibrad ausgebildet sein. In diesem Fall ist auch das Antriebsrad als Reibrad ausgebildet.

Des Weiteren ist bevorzugt vorgesehen, dass auf der zweiten Wirkdrehachse ein zweites Drehachsenrad angeordnet ist, das zur Bildung der zweiten Getriebestufe mit dem Antriebsrad in drehmomentübertragender Wirkverbindung steht. Bei dem zweiten Drehachsenrad handelt es sich vorzugsweise um ein Zahnrad, auch bezeichnet als Drehachsen-Zahnrad. Dementsprechend steht dieses Zahnrad vorzugsweise mit dem Antriebsrad in Eingriff. Alternativ kann das zweite Drehachsenrad beispielsweise auch als Reibrad ausgebildet sein. In diesem Fall ist auch das Antriebsrad als Reibrad ausgebildet.

Die beiden Wirkdrehachsen und die Antriebsachse stehen vorzugsweise parallel zueinander. Dementsprechend handelt es sich bei den Rädern vorzugsweise um Stirnzahnräder.

Bevorzugt ist vorgesehen, dass das Antriebsrad und die beiden Drehachsenräder jeweils unrunde Wälzkurven aufweisen.

Vorzugsweise sind die beiden Wälzkurven der beiden Drehachsenräder deckungsgleich.

Die Wälzkurve des Antriebsrades unterscheidet sich vorzugsweise von der Wälzkurve des ersten Drehachsenrades und des zweiten Drehachsenrades. Alternativ kann die Wälzkurve des Antriebsrades deckungsgleich zu der Wälzkurve des ersten Drehachsenrades und/oder zu der Wälzkurve des zweiten Drehachsenrades sein.

Das erste Drehachsenrad weist vorzugsweise einen ersten rotationsbedingt veränderlichen Wirkradius auf. Dieser erste Wirkradius wird vom Drehmittelpunkt des ersten Drehachsenrades zum Kontaktpunkt zwischen erstem Drehachsenrad und Antriebsrad gemessen. Da das erste Drehachsenrad und/oder das Antriebsrad eine unrunde Wälzkurve aufweisen, kann die Getriebestufe so gestaltet sein, dass sich bei Drehen der Räder dieser Wirkradius verändert. Bevorzugt weist das Antriebsrad einen zugehörigen rotationsbedingt veränderlichen Antriebsradius auf. Dieser Antriebsradius wird vom Drehpunkt des Antriebsrades zu dem Kontaktpunkt zwischen erstem Drehachsenrad und Antriebsrad gemessen. Vorzugsweise ist vorgesehen, dass die Summe aus dem ersten Wirkradius und dem zugehörigen Antriebsradius während einer Rotation des Antriebsrads konstant ist.

Das zweite Drehachsenrad weist vorzugsweise einen zweiten rotationsbedingt veränderlichen Wirkradius auf. Dieser zweite Wirkradius wird vom Drehmittelpunkt des zweiten Drehachsenrades zum Kontaktpunkt zwischen zweitem Drehachsenrad und Antriebsrad gemessen. Da das zweite Drehachsenrad und/oder das Antriebsrad eine unrunde Wälzkurve aufweisen, kann die Getriebestufe so gestaltet sein, dass sich bei Drehen der Räder dieser Wirkradius verändert. Bevorzugt weist das Antriebsrad einen zugehörigen rotationsbedingt veränderlichen Antriebsradius auf. Dieser Antriebsradius wird vom Drehpunkt des Antriebsrades zu dem Kontaktpunkt zwischen zweitem Drehachsenrad und Antriebsrad gemessen. Vorzugsweise ist vorgesehen, dass die Summe aus dem zweitem Wirkradius und dem zugehörigen Antriebsradius während einer Rotation des Antriebsrads konstant ist.

Des Weiteren ist bevorzugt vorgesehen, dass der Abstand zwischen der ersten Wirkdrehachse und der Antriebsachse gleich dem Abstand zwischen der zweiten Wirkdrehachse und der Antriebsachse ist.

Bevorzugt ist vorgesehen, dass die Drehachsenräder und das Antriebsrad gegenüber einer jeweiligen Symmetrieachse symmetrisch, insbesondere konvex, sind. Entlang der jeweiligen Symmetrieachse ist eine Länge und senkrecht zur Symmetrieachse eine Breite des jeweiligen Rades definiert. Bevorzugt sitzt die Wirkdrehachse auf der Symmetrieachse des zugehörigen Drehachsenrades und/oder die Antriebsachse sitzt auf der Symmetrieachse des Antriebsrades.

Ferner ist bevorzugt vorgesehen, dass die Länge der Drehachsenräder jeweils größer als die Breite der Drehachsenräder ist. Vorzugsweise schneidet eine Breiten-Linie an der breitesten Stelle des jeweiligen Drehachsenrades eine Längen-Linie an der längsten Stelle des selben Drehachsenrades außermittig. Dadurch ergibt sich insbesondere eine birnenförmige Ausgestaltung der Drehachsenräder.

Vorzugsweise ist der Drehmittelpunkt bzw. die Wirkdrehachse des jeweiligen Drehachsenrades bzgl. der Länge außermittig angeordnet. Zusätzlich oder alternativ ist vorzugsweise der Drehmittelpunkt bzw. die Wirkdrehachse des jeweiligen Drehachsenrades bzgl. der Breite mittig angeordnet.

Des Weiteren ist bevorzugt vorgesehen, dass die Länge des Antriebsrades kleiner als die Breite des Antriebsrades ist. Vorzugsweise schneidet eine Breiten-Linie an der breitesten Stelle des Antriebsrades eine Längen-Linie an der längsten Stelle des Antriebsrades außermittig. Dadurch ergibt sich insbesondere eine apfelförmige Ausgestaltung des Antriebsrades.

Alternativ ist es möglich, dass die Breite und die Länge des Antriebsrads gleich sind. Auf diese Weise würde sich eine kleeblattförmige Ausgestaltung des Antriebsrades ergeben.

Ferner ist es möglich, dass das Antriebsrad eine dreiecksförmige Ausgestaltung annimmt.

Vorzugsweise ist der Drehmittelpunkt bzw. die Antriebsachse des Antriebsrades bzgl. der Länge außermittig angeordnet. Zusätzlich oder alternativ ist vorzugsweise der Drehmittelpunkt bzw. die Antriebsachse des Antriebsrades bzgl. der Breite mittig angeordnet.

Die in den unabhängigen Ansprüchen als ein Merkmal des beanspruchten Gegenstands genannte Getriebevorrichtung umfasst vorzugsweise eine Abtriebshohlwelle zur drehfesten Verbindung mit dem ersten Element, insbesondere Sperrelement, wobei die erste Wirkdrehachse über eine dritte Getriebestufe drehmomentübertragend in Wirkverbindung mit der Antriebshohlwelle steht.

Des Weiteren umfasst diese Getriebevorrichtung vorzugsweise eine Abtriebswelle, die sich in der Antriebshohlwelle befindet. Die Abtriebswelle ist zur drehfesten Verbindung mit dem zweiten Element, insbesondere Sperrelement, ausgebildet. Die zweite Wirkdrehachse steht über eine vierte Getriebestufe drehmomentübertragend in Wirkverbindung mit der Abtriebswelle.

Durch die Anordnung der beiden Wellen - Abtriebswelle und Abtriebshohlwelle - zumindest teilweise ineinander können die beiden Elemente um eine gemeinsame Abtriebsachse rotieren. Dies ermöglicht einen kompakten Aufbau.

Des Weiteren ist bevorzugt vorgesehen, dass die in den unabhängigen Ansprüchen als ein Merkmal des beanspruchten Gegenstands genannte Getriebevorrichtung ein zur Übertragung eines Drehmoments mit dem ersten Drehachsenrad, insbesondere drehfest, verbundenes erstes Zwischenrad aufweist. Das erste Zwischenrad ist drehmomentübertragend in Wirkverbindung, insbesondere in Kontakt oder in Eingriff, mit der Abtriebshohlwelle. Auf der Abtriebshohlwelle befindet sich vorzugsweise ein erstes Abtriebsrad, das drehmomentübertragend mit dem ersten Zwischenrad in Kontakt oder in Eingriff ist. Das erste Zwischenrad und das erste Abtriebsrad können insbesondere als Zahnräder oder Reibräder ausgebildet sein.

Des Weiteren ist bevorzugt vorgesehen, dass die in den unabhängigen Ansprüchen als ein Merkmal des beanspruchten Gegenstands genannte Getriebevorrichtung ein zur Übertragung eines Drehmoments mit dem zweiten Drehachsenrad, insbesondere drehfest, verbundenes zweites Zwischenrad aufweist. Das zweite Zwischenrad ist drehmomentübertragend in Wirkverbindung, insbesondere in Kontakt oder in Eingriff, mit der Abtriebswelle. Auf der Abtriebswelle befindet sich vorzugsweise ein zweites Abtriebsrad, das drehmomentübertragend mit dem zweiten Zwischenrad in Kontakt oder in Eingriff ist. Das zweite Zwischenrad und das zweite Abtriebsrad können insbesondere als Zahnräder oder Reibräder ausgebildet sein.

Durch die Anordnung der Abtriebswelle in der Abtriebshohlwelle, kann die Abtriebswelle aus der Abtriebshohlwelle herausstehen, so dass am herausstehenden Ende der Abtriebswelle das zweite Abtriebsrad koaxial zum ersten Abtriebsrad angeordnet werden kann. Diese beiden koaxialen Abtriebsräder stehen in drehmomentübertragender Wirkverbindung mit den beiden Zwischenrädern der dritten und vierten Getriebestufe. Die beiden Zwischenräder können dabei insbesondere koaxial zu den jeweiligen Wirkdrehachsen angeordnet und insbesondere drehfest mit dem jeweiligen Drehachsenrad verbunden sein.

Die in den unabhängigen Ansprüchen als ein Merkmal des beanspruchten Gegenstands genannte Getriebevorrichtung umfasst vorzugsweise einen mit der Antriebsachse drehmomentübertragend verbundenen Elektromotor und/oder eine mit der Antriebsachse drehmomentübertragend verbundene Dämpfungsvorrichtung und/oder eine mit der Antriebsachse drehmomentübertragend verbundene Kupplung und/oder eine mit der Antriebsachse drehmomentübertragend verbundene Bremse.

Bei Verwendung des Elektromotors kann die Antriebsachse in Rotation versetzt werden, wodurch sich zwangsläufig auch die beiden Wirkdrehachsen und somit die beiden Elemente drehen.

Ferner ist es auch möglich, dass, beispielsweise indem eine Person gegen eines der beiden Elemente drückt, das Element und somit auch die zugehörige Wirkdrehachse manuell in Rotation versetzt wird. Durch die zwangsgebundene Verbindung über die erste und zweite Getriebestufe rotiert dabei gleichzeitig die Antriebsachse und die andere Wirkdrehachse. Um die Bewegung zu dämpfen, zu bremsen oder anderweitig zu beeinflussen, kann die Antriebsachse mit der Dämpfungsvorrichtung und/oder der Bremse und/oder der Kupplung verbunden sein.

Bevorzugt umfasst die in den unabhängigen Ansprüchen als ein Merkmal des beanspruchten Gegenstands genannte Getriebevorrichtung eine Kurbelachse, die versetzt oder koaxial zur Antriebsachse steht. Insbesondere kann die Dämpfungsvorrichtung und/oder die Bremse und/oder die Kupplung und/oder die Abtriebswelle des Elektromotors mit der Kurbelachse in Wirkverbindung stehen. Besonders bevorzugt steht die Abtriebsachse des Elektromotors koaxial zur Kurbelachse.

Insbesondere ist ein Übersetzungsverhältnis i als Verhältnis der Drehzahl der Kurbelachse als Dividend zur Drehzahl der Antriebsachse definiert. Insbesondere kann das Übersetzungsverhältnis i und somit die Kurbelachse derart ausgebildet sein, dass i > 1 ist, insbesondere i = n/1 ist, wobei n der Anzahl der Elemente, insbesondere der Anzahl der Sperrelemente entspricht.

Des Weiteren kann es vorgesehen sein, koaxial auf der Antriebsachse eine Riemenscheibe anzuordnen, die über einen Riemen in Rotation versetzt wird. Der Riemen wiederum kann über den Elektromotor angetrieben werden.

Die Erfindung wird nun anhand eines Ausführungsbeispiels näher beschrieben. Dabei zeigen:
- Fig. 1: eine Perspektive einer erfindungsgemäßen Durchgangsvorrichtung, ausgebildet als Drehsperre, mit einer Getriebevorrichtung gemäß einem Ausführungsbeispiel, und
- Fig. 2: ein Detail der Getriebevorrichtung gemäß Figur 1.

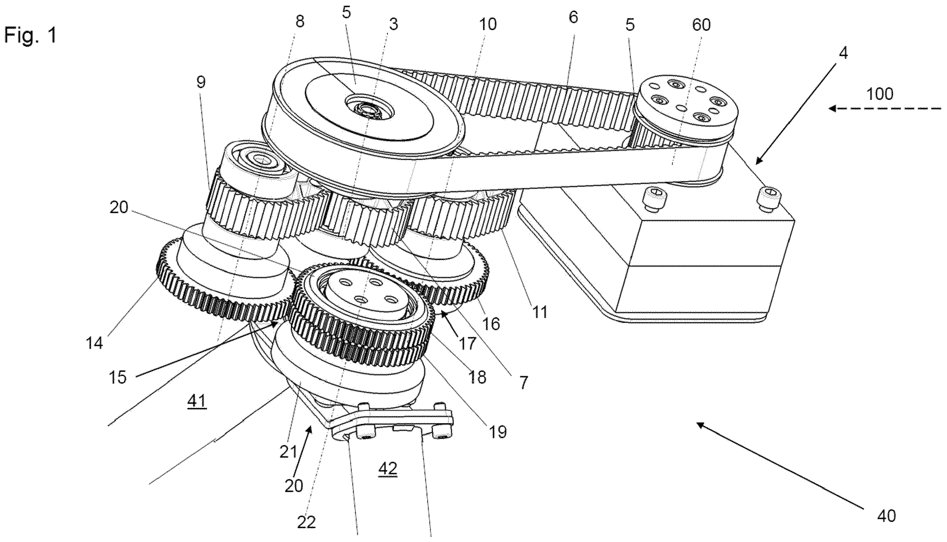

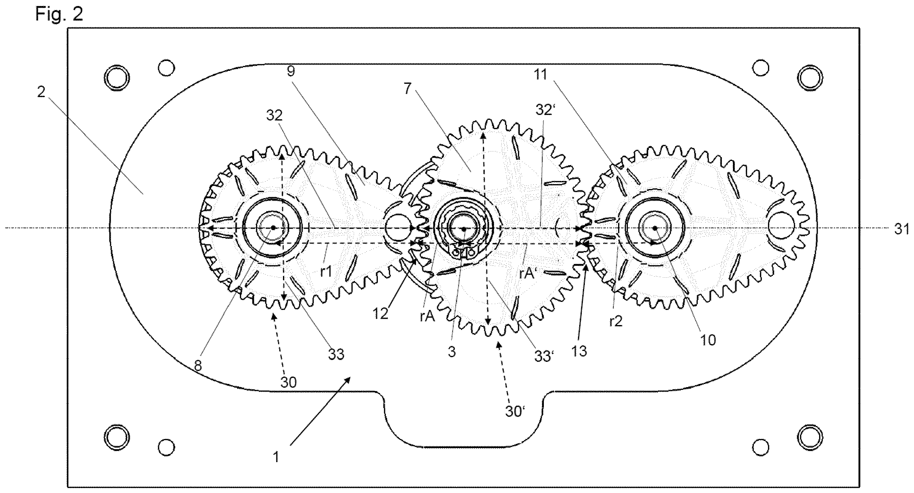

Im Folgenden wird anhand der Fig. 1 und 2 eine Durchgangsvorrichtung 40, ausgebildet als Drehsperre, erläutert. Die Durchgangsvorrichtung 40 umfasst eine Getriebevorrichtung 1 zum diskontinuierlichen Bewegen von zwei Sperrelementen 41, 42, hier ausgebildet als Sperrholme. Soweit nicht anders erwähnt, wird im Folgenden stets auf alle Figuren Bezug genommen.

Die Durchgangsvorrichtung 40 wird beispielsweise in der in Fig. 1 eingezeichneten Durchgangsrichtung 100 durchschritten. Dabei ist die durchgehende Person bei Durchgangsrichtung 100 von dem ersten Sperrelement 41 am Durchgang gehindert bzw. bei Bewegen des ersten Sperrelements 41 kann die durchgehende Person diesem ersten Sperrelement 41 folgen und dabei die Durchgangsvorrichtung 40 passieren. Beim Passieren der Durchgangsvorrichtung 40 drehen sich beide Sperrelemente 41, 42 um eine Abtriebsachse 22.

Die Getriebevorrichtung 1 umfasst ein Gehäuse 2, das in Fig. 2 schematisch dargestellt ist. In dem Gehäuse 2 ist eine Antriebsachse 3 drehbeweglich gelagert. Fig. 1 zeigt mit gestrichelter Linie die imaginäre Verlängerung dieser Antriebsachse 3. Koaxial auf der Antriebsachse 3 befindet sich eine Riemenscheibe 5.

Ferner umfasst die Getriebevorrichtung 1 einen Elektromotor 4, der eine weitere Riemenscheibe 5 rotierend um eine Kurbelachse 60 antreibt. Die beiden Riemenscheiben 5 sind über einen Riemen 6 miteinander antriebsverbunden, so dass sich bei rotierendem Elektromotor 4 auch die Antriebsachse 3 dreht.

Ferner weist die Getriebevorrichtung 1 eine erste Wirkdrehachse 8 und eine zweite Wirkdrehachse 10 auf. Fig. 1 zeigt zu diesen beiden Wirkdrehachsen 8, 10 in gestrichelter Darstellung die imaginäre Verlängerung.

Die Antriebsachse 3 und die beiden Wirkdrehachsen 8, 10 stehen versetzt und parallel zueinander. Auch stehen diese drei Achsen auch parallel zur Abtriebsachse 22.

Auf der Antriebsachse 3 befindet sich ein Antriebsrad 7, hier ausgebildet als Antriebszahnrad. Auf der ersten Wirkdrehachse 8 befindet sich ein erstes Drehachsenrad, hier ausgebildet als erstes Drehachsen-Zahnrad. Auf der zweiten Wirkdrehachse 10 befindet sich ein zweites Drehachsenrad, hier ausgebildet als Drehachsen-Zahnrad.

Das Antriebszahnrad 7 steht mit dem ersten Drehachsenrad 9 in Eingriff und bildet dabei eine erste Getriebestufe 12. Das Antriebsrad 7 steht ferner mit dem zweiten Drehachsenrad 11 in Eingriff und bildet dabei eine zweite Getriebestufe 13.

Koaxial und drehfest auf der ersten Wirkdrehachse 8 befindet sich ein erstes Zwischenrad 14. Koaxial und drehfest auf der zweiten Wirkdrehachse 10 befindet sich ein zweites Zwischenrad 16.

Koaxial zur Abtriebsachse 22 sind eine Abtriebswelle 20 und eine Abtriebshohlwelle 21 vorgesehen. Die Abtriebswelle 20 befindet sich teilweise in der Abtriebshohlwelle 21. Die Abtriebswelle 20 ist drehfest mit dem zweiten Sperrelement 42 verbunden. Die Abtriebshohlwelle 21 ist drehfest mit dem ersten Sperrelement 41 verbunden. Auf der Abtriebshohlwelle 21 sitzt ein erstes Abtriebsrad 19. Auf der Abtriebswelle 20 sitzt ein zweites Abtriebsrad 18. Diese beiden Abtriebsräder 18, 19 sind jeweils drehfest mit der Abtriebswelle 20 bzw. Abtriebshohlwelle 21 verbunden und sitzen koaxial auf der Abtriebsachse 22.

Das erste Zwischenrad 14 steht mit dem ersten Abtriebsrad 19 in Eingriff und bildet dabei eine dritte Getriebestufe 15. Das zweite Zwischenrad 16 steht mit dem zweiten Abtriebsrad 18 in Eingriff und bildet dabei eine vierte Getriebestufe 17.

Über die dritte Getriebestufe 15 und die vierte Getriebestufe 17 erfolgt ein zwangsläufiger Antrieb der Abtriebshohlwelle 21 und der Abtriebswelle 20 und somit auch der beiden Sperrelemente 41, 42 bei einer Rotation der Antriebsachse 3 bzw. des Antriebsrades 7.

Wenn nun eine Person in Durchgangsrichtung 100 die Sperre passiert, bewegt sich aufgrund der nachstehen beschriebenen Getriebevorrichtung 1 das erste Sperrelement 41 zunächst langsam und im späteren Verlauf schnell, während sich das zweite Sperrelement 42 zunächst schnell und im späteren Verlauf langsam bewegt. Auf diese Weise wird eine bessere Vereinzelung ermöglicht, indem das nachlaufende Sperrelement 42, zunächst schnell und im späteren Verlauf langsam läuft, sodass eine weitere Person sich nur schwer zwischen der Person und dem nachlaufenden Sperrelement 42 drängen kann.

Fig. 2 zeigt die Getriebevorrichtung 1, das Antriebsrad 7 zwischen den beiden Drehachsenrädern 9, 11 in Draufsicht. Demgemäß weisen die beiden Drehachsenräder 9, 11 jeweils eine Wälzkurve 30 auf. Die Wälzkurven 30 dieser beiden Drehachsenräder 9, 11 sind deckungsgleich.

Das Antriebsrad 7 weist eine Wälzkurze 30' auf. Die Wälzkurven 30 und 30' aller drei Räder sind unrund.

Die Drehachsenräder 9, 11 und das Antriebsrad 7 sind bezüglich der eingezeichneten Symmetrieachse 31 symmetrisch ausgebildet. Der jeweilige Drehmittelpunkt des Antriebsrades 7, des ersten Drehachsenrades 9 bzw. des zweiten Drehachsenrades 11 sitzt auf der zugehörigen Symmetrieachse 31.

Senkrecht zur Symmetrieachse 31 ist die Breite 33 der Drehachsenräder 9, 11 bzw. die Breite 33' des Antriebsrades 7 definiert. Parallel zur Symmetrieachse 31 und somit senkrecht zur Breite ist eine Länge 32 der Drehachsenräder 9, 11 bzw. eine Länge des 32' des Antriebsrades 7 definiert.

Bei den beiden Drehachsenrädern 9, 11 ist jeweils die Länge 32 größer als die Breite 33. Bei dem Antriebsrad 7 ist die Breite 33' größer als die Länge 32'.

Des Weiteren zeigt Fig. 2 einen ersten Wirkradius r1 des ersten Drehachsenrades 9 und einen zweiten Wirkradius r2 des zweiten Drehachsenrades 11, jeweils gemessen vom Drehmittelpunkt zum Kontaktpunkt mit dem Antriebsrad 7. Das Antriebsrad 7 weist zum Kontaktpunkt mit dem ersten Drehachsenrad 9 einen Antriebsradius rA auf. Der Antriebsradius zum zweiten Drehachsenrad 11 ist mit rA` eingezeichnet.

Ferner ist vorgesehen, dass sich zwar die einzelnen Wirkradien r1, r2 sowie Antriebsradien rA, rA` bei Rotation der Getriebevorrichtung 1 verändern, jedoch die Summe aus r1 und rA sowie Summe aus r2 und rA` bei Rotation konstant bleiben.

Eine derart ausgebildete Getriebevorrichtung zeigt eine kompakte und zuverlässige Lösung zum diskontinuierlichen Bewegen von zwei zwangsverbundenen Elementen.

### Bezugszeichenliste

- 1: Getriebevorrichtung
- 2: Gehäuse
- 3: Antriebsachse
- 4: Elektromotor
- 5: Riemenscheibe
- 6: Riemen
- 7: Antriebszahnrad
- 8: erste Wirkdrehachse
- 9: erstes Drehachsenrad
- 10: zweite Wirkdrehachse
- 11: zweites Drehachsenrad
- 12: erste Getriebestufe
- 13: zweite Getriebestufe
- 14: erstes Zwischenrad
- 15: dritte Getriebestufe
- 16: zweites Zwischenrad
- 17: vierte Getriebestufe
- 18: zweites Abtriebsrad
- 19: erstes Abtriebsrad
- 20: Abtriebswelle
- 21: Abtriebshohlwelle
- 22: Abtriebsachse (Drehsperrendrehachse)
- 30/30': Wälzkurve
- 31: Symmetrieachse
- 32/32': Länge
- 33/33': Breite
- r1: erster Wirkradius
- r2: zweiter Wirkradius
- rA/rA': Antriebsradius

- 40: Durchgangsvorrichtung (Drehsperre)
- 41: erstes Sperrelement (Sperrholm)
- 42: zweites Sperrelement (Sperrholm)
- 60: Kurbelachse
- 100: Durchgangsrichtung

## Patentansprüche

1. Verwendung einer Getriebevorrichtung (1) zum diskontinuierlichen Bewegen von zumindest einem ersten Element, insbesondere einem ersten Sperrelement (41), und einem zweiten Element, insbesondere einem zweiten Sperrelement (42), einer Durchgangsvorrichtung (40), in der Durchgangsvorrichtung (40), insbesondere
• in einer Drehsperre (40) zum Bewegen der Sperrelemente, ausgebildet als Sperrholme der Drehsperre, oder
• in einem Drehkreuz zum Bewegen der Sperrelemente, ausgebildet als Drehkreuzflügel, oder
• in einer Karusselltür zum Bewegen der Sperrelemente, ausgebildet als Karusselltürflügel der Karusselltür, oder
• in einer zweiflügeligen Drehtür zum Bewegen der Sperrelemente, ausgebildet als Türflügel der Drehtür,
• wobei die Getriebevorrichtung (1) umfasst:
• eine Antriebsachse (3),
• eine erste Wirkdrehachse (8), ausgebildet zur drehmomentübertragenden Wirkverbindung mit dem ersten Element, insbesondere dem ersten Sperrelement (41),
• eine erste, ungleichmäßig übersetzende Getriebestufe (12) zwischen der Antriebsache (3) und der ersten Wirkdrehachse (8),
• eine zweite Wirkdrehachse (10), ausgebildet zur drehmomentübertragenden Wirkverbindung mit dem zweiten Element, insbesondere dem zweiten Sperrelement (42),
• eine zweite, ungleichmäßig übersetzende Getriebestufe (13) zwischen der Antriebsache (3) und der zweiten Wirkdrehachse (10).

2. Verwendung nach Anspruch 1,
• wobei die erste Getriebestufe (12) einen ersten Übersetzungsverlauf, definiert als Übersetzungsverhältnis über dem Drehwinkel der Antriebsachse (3), aufweist,
• wobei die zweite Getriebestufe (13) einen zweiten Übersetzungsverlauf, definiert als Übersetzungsverhältnis über dem Drehwinkel der Antriebsachse (3), aufweist
• und wobei der erste Übersetzungsverlauf der ersten Getriebestufe (12) und der zweite Übersetzungsverlauf der zweiten Getriebestufe (13) gleich aber versetzt zueinander, vorzugsweise um 180° bezogen auf den Drehwinkel der Antriebsachse (3), sind.

3. Verwendung nach einem der vorhergehenden Ansprüche,
• wobei auf der Antriebsachse (3) ein Antriebsrad (7), insbesondere Antriebszahnrad, angeordnet ist,
• wobei auf der ersten Wirkdrehachse (8) ein erstes Drehachsenrad (9), insbesondere Drehachsen-Zahnrad, angeordnet ist, das zur Bildung der ersten Getriebestufe (12) mit dem Antriebsrad (7) drehmomentübertragend in Wirkverbindung, insbesondere in Kontakt oder in Eingriff steht,
• und auf der zweiten Wirkdrehachse (10) ein zweites Drehachsenrad (11), insbesondere Drehachsen-Zahnrad, angeordnet ist, das zur Bildung der zweiten Getriebestufe (13) mit dem Antriebsrad (7) drehmomentübertragend in Wirkverbindung, insbesondere in Kontakt oder in Eingriff steht.

4. Verwendung nach Anspruch 3, wobei das Antriebsrad (7) und die Drehachsenräder (9, 11) jeweils unrunde Wälzkurven (30, 30') aufweisen.

5. Verwendung nach Anspruch 3 oder 4, wobei die Wälzkurven (30) der beiden Drehachsenräder (9, 11) gleich sind.

6. Verwendung nach Anspruch 4 oder 5, wobei die Wälzkurven (30) der Drehachsenräder (9, 11) und die Wälzkurve (30') des Antriebsrades (7) unterschiedlich oder gleich sind.

7. Verwendung nach einem der Ansprüche 3 bis 6,
• wobei das erste Drehachsenrad (9) einen ersten rotationsbedingt veränderlichen Wirkradius (r1) aufweist und das Antriebsrad (7) einen dem ersten Drehachsenrad (9) zugehörigen rotationsbedingt veränderlichen Antriebsradius (rA) aufweist, wobei die Summe aus dem ersten Wirkradius (r1) und dem Antriebsradius (rA) während einer Rotation des Antriebsrads (7) konstant ist,
• und/oder wobei das zweite Drehachsenrad (11) einen zweiten rotationsbedingt veränderlichen Wirkradius (r2) aufweist und das Antriebsrad (7) einen dem zweiten Drehachsenrad (11) zugehörigen rotationsbedingt veränderlichen Antriebsradius (rA') aufweist, wobei die Summe aus dem zweiten Wirkradius (r2) und dem Antriebsradius (rA') während einer Rotation des Antriebsrads (7) konstant ist.

8. Verwendung nach einem der Ansprüche 4 bis 7,
• wobei die Drehachsenräder (9, 11) und das Antriebsrad (7) gegenüber einer jeweiligen Symmetrieachse (31) symmetrisch, insbesondere konvex, sind, und entlang der jeweiligen Symmetrieachse (31) eine Länge (32, 32') und senkrecht zur Symmetrieachse (31) eine Breite (33, 33') aufweisen,
• und wobei die Wirkdrehachse (8, 10) auf der Symmetrieachse (31) des zugehörigen Drehachsenrades (9, 11) und/oder wobei die Antriebsachse (3) auf der Symmetrieachse (31) des Antriebsrads (7) sitzt.

9. Verwendung nach Anspruch 7 oder 8,
• wobei die Länge (32) der Drehachsenräder (9, 11) jeweils größer als die Breite (33) der Drehachsenräder (9, 11) ist,
• und/oder wobei die Länge (32') des Antriebsrades (7) kleiner als die Breite (33') des Antriebsrades (7) ist.

10. Verwendung nach einem der vorhergehenden Ansprüche, wobei die Getriebevorrichtung umfasst
• eine Abtriebshohlwelle (21) zur drehfesten Verbindung mit dem ersten Element, insbesondere dem ersten Sperrelement (41), wobei die erste Wirkdrehachse (8) über eine dritte Getriebestufe (15) drehmomentübertragend in Wirkverbindung mit der Abtriebshohlwelle (21) steht,
• und eine zumindest teilweise in der Abtriebshohlwelle (21) angeordnete Abtriebswelle (20) zur drehfesten Verbindung mit dem zweiten Element, insbesondere dem zweiten Sperrelement (42), wobei die zweite Wirkdrehachse (10) über eine vierte Getriebestufe (17) drehmomentübertragend in Wirkverbindung mit der Abtriebswelle (20) steht.

11. Verwendung nach Anspruch 10, wobei die Getriebevorrichtung umfasst
• ein zur Übertragung eines Drehmoments mit dem ersten Drehachsenrad (9), insbesondere drehfest, verbundenes erstes Zwischenrad (14), das drehmomentübertragend in Wirkverbindung, insbesondere in Kontakt oder in Eingriff, mit der Abtriebshohlwelle (21) steht,
• und ein zur Übertragung eines Drehmoments mit dem zweiten Drehachsenrad (11), insbesondere drehfest, verbundenes zweites Zwischenrad (16), das drehmomentübertragend in Wirkverbindung, insbesondere in Kontakt oder in Eingriff, mit der Abtriebswelle (20) steht.

12. Verwendung nach einem der vorhergehenden Ansprüche, wobei die Getriebevorrichtung umfasst: einen mit der Antriebsachse (3) verbundenen Elektromotor (4) und/oder eine mit der Antriebsachse (3) verbundene Dämpfungsvorrichtung und/oder eine mit der Antriebsachse (3) verbundene Kupplung und/oder eine mit der Antriebsachse (3) verbundene Bremse.

13. Drehsperre (40) zur Zutrittskontrolle und/oder Vereinzelung, umfassend ein erstes Sperrelement (41) und ein zweites Sperrelement (42) sowie eine Getriebevorrichtung (1),
• wobei die Getriebevorrichtung (1) umfasst:
∘ eine Antriebsachse (3),
∘ eine erste Wirkdrehachse (8), ausgebildet zur drehmomentübertragenden Wirkverbindung mit dem ersten Sperrelement (41),
∘ eine erste, ungleichmäßig übersetzende Getriebestufe (12) zwischen der Antriebsache (3) und der ersten Wirkdrehachse (8),
∘ eine zweite Wirkdrehachse (10), ausgebildet zur drehmomentübertragenden Wirkverbindung mit dem zweiten Sperrelement (42),
∘ eine zweite, ungleichmäßig übersetzende Getriebestufe (13) zwischen der Antriebsache (3) und der zweiten Wirkdrehachse (10),
• wobei das erste Sperrelement (41) und das zweite Sperrelement (42), die jeweils als Sperrholm ausgebildet sind, um eine gemeinsame Abtriebsachse (22) drehbar gelagert sind und mit jeweils einer der Wirkdrehachsen (8, 10) der Getriebevorrichtung (1) drehmomentübertragend verbunden sind.

14. Drehkreuz zur Zutrittskontrolle und/oder Vereinzelung, umfassend ein erstes Sperrelement (41) und ein zweites Sperrelement (42) sowie eine Getriebevorrichtung (1),
• wobei die Getriebevorrichtung (1) umfasst:
∘ eine Antriebsachse (3),
∘ eine erste Wirkdrehachse (8), ausgebildet zur drehmomentübertragenden Wirkverbindung mit dem ersten Sperrelement (41),
∘ eine erste, ungleichmäßig übersetzende Getriebestufe (12) zwischen der Antriebsache (3) und der ersten Wirkdrehachse (8),
∘ eine zweite Wirkdrehachse (10), ausgebildet zur drehmomentübertragenden Wirkverbindung mit dem zweiten Sperrelement (42),
∘ eine zweite, ungleichmäßig übersetzende Getriebestufe (13) zwischen der Antriebsache (3) und der zweiten Wirkdrehachse (10),
• wobei das erste Sperrelement (41) und das zweite Sperrelement (42), die jeweils als Drehkreuzflügel ausgebildet sind, um eine gemeinsame Abtriebsachse (22) drehbar gelagert sind und mit jeweils einer der Wirkdrehachsen (8, 10) der Getriebevorrichtung (1) drehmomentübertragend verbunden sind.

## Claims

1. A use of a gearing device (1) for discontinuously moving at least one first element, in particular a first barrier element (41), and one second element, in particular a second barrier element (42), of a passageway device (40), in the passageway device (40), in particular
• in a tripod barrier (40) for moving the barrier elements, formed as barrier stiles of the tripod barrier, or
• in a turnstile for moving the barrier elements, formed as turnstile leaves, or
• in a revolving door for moving the barrier elements, formed as revolving door leaves of the revolving door, or
• in a two-leaf swing door for moving the barrier elements, formed as door leaves of the swing door,
• wherein the gearing device (1) comprises:
• a drive axis (3),
• a first active axis of rotation (8) formed for torque-transmitting operative connection to the first element, in particular the first barrier element (41),
• a first non-uniformly translating gearing stage (12) between the drive axis (3) and the first active axis of rotation (8),
• a second active axis of rotation (10) formed for torque-transmitting operative connection to the second element, in particular the second barrier element (42),
• a second non-uniformly translating gearing stage (13) between the drive axis (3) and the second active axis of rotation (10).

2. The use according to claim 1,
• wherein the first gearing stage (12) includes a first translation curve, defined as the translation ratio over the angle of rotation of the drive axis (3),
• wherein the second gearing stage (13) includes a second translation curve, defined as the translation ratio over the angle of rotation of the drive axis (3),
• and wherein the first translation curve of the first gearing stage (12) and the second translation curve of the second gearing stage (13) are the same, however, offset to each other, preferably by 180° with regard to the angle of rotation of the drive axis (3).

3. The use according to any of the preceding claims,
• wherein a drive wheel (7), in particular a toothed drive wheel, is disposed on the drive axis (3),
• wherein on the first active axis of rotation (8) is disposed a first axis of rotation wheel (9), in particular axis of rotation toothed wheel, which is in torque-transmitting operative connection with the drive wheel (7), in particular in contact or in engagement, for forming the first gearing stage (12),
• and on the second active axis of rotation (10) is disposed a second axis of rotation wheel (11), in particular axis of rotation toothed wheel, which is in torque-transmitting operative connection with the drive wheel (7), in particular in contact or in engagement, for forming the second gearing stage (13).

4. The use according to claim 3, wherein the drive wheel (7) and the axis of rotation wheels (9, 11) have respective non-round rolling curves (30, 30').

5. The use according to claim 3 or 4, wherein the rolling curves (30) of both axis of rotation wheels (9, 11) are the same.

6. The use according to claim 4 or 5, wherein the rolling curves (30) of the axis of rotation wheels (9, 11) and the rolling curve (30') of the drive wheel (7) are different or the same.

7. The use according to any of the claims 3 to 6,
• wherein the first axis of rotation wheel (9) has a first rotation-based changeable effective radius (r1) and, the drive wheel (7) has a rotation-based changeable drive radius (rA) associated with the first axis of rotation wheel (9), wherein the sum of the first effective radius (r1) and the drive radius (rA) is constant during a rotation of the drive wheel (7),
• and/or wherein the second axis of rotation wheel (11) has a second rotation-based changeable effective radius (r2) and the drive wheel (7) has a rotation-based changeable drive radius (rA') associated with the second axis of rotation wheel (11), wherein the sum of the second effective radius (r2) and the drive radius (rA') is constant during a rotation of the drive wheel (7).

8. The use according to any of the claims 4 to 7,
• wherein, with regard to a respective symmetry axis (31), the axis of rotation wheels (9, 11) and the drive wheel (7) are symmetric, in particular convex, and along the respective symmetry axis (31), have a length (32, 32') and, vertically to the symmetry axis (31), have a width (33, 33'),
• and wherein the active axis of rotation (8, 10) is located on the symmetry axis (31) of the associated axis of rotation wheel (9, 11) and/or the drive axis (3) is located on the symmetry axis (31) of the drive wheel (7).

9. The use according to claim 7 or 8,
• wherein the length (32) of the axis of rotation wheels (9, 11) is respectively greater than the width (33) of the axis of rotation wheels (9, 11),
• and/or wherein the length (32') of the drive wheel (7) is smaller than the width (33') of the drive wheel (7).

10. The use according to any of the preceding claims, wherein the gearing device comprises
• a hollow output shaft (21) for the torque-proof connection to the first element, in particular the first barrier element (41), wherein the first active axis of rotation (8) is in torque-transmitting operative connection with the hollow output shaft (21) via a third gearing stage (15),
• and an output shaft (20), which is at least partially disposed in the hollow output shaft (21), for the torque-proof connection to the second element, in particular the second barrier element (42), wherein the second active axis of rotation (10) is in torque-transmitting operative connection with the output shaft (20) via a fourth gearing stage (17).

11. The use according to claim 10, wherein the gearing device comprises
• for transmitting torque, a first idler wheel (14) connected, in particular torque-proof, to the first axis of rotation wheel (9) and in torque-transmitting operative connection, in particular in contact or in engagement, with the hollow output shaft (21),
• and for transmitting torque, a second idler wheel (16) connected, in particular torque-proof, to the second axis of rotation wheel (11) and in torque-transmitting operative connection, in particular in contact or in engagement, with the output shaft (20).

12. The use according to any of the preceding claims, wherein the gearing device comprises: an electric motor (4) connected to the drive axis (3) and/or a damping device connected to the drive axis (3) and/or a coupling connected to the drive axis (3) and/or a brake connected to the drive axis (3).

13. A tripod barrier (40) for controlling access and/or singularization, comprising a first barrier element (41) and a second barrier element (42) as well as a gearing device (1), wherein the gearing device (1) comprises:
• a drive axis (3),
∘ a first active axis of rotation (8), formed for being in torque-transmitting operative connection with the first element (41),
∘ a first non-uniformly translating gearing stage (12) between the drive axis (3) and the first active axis of rotation (8),
∘ a second active axis of rotation (10), formed for being in torque-transmitting operative connection with the second element (42),
∘ a second non-uniformly translating gearing stage (13) between the drive axis (3) and the second active axis of rotation (10),
• wherein the first barrier element (41) and the second barrier element (42), which are each formed as barrier stiles, are rotatably supported about a common output axis (22), and are torque-transmitting connected to a respective one of the active axes of rotation (8, 10) of the gearing device (1).

14. A turnstile for controlling access and/or singularization, comprising a first barrier element (41) and a second barrier element (42) as well as a gearing device (1),
• wherein the gearing device (1) comprises:
∘ a drive axis (3),
∘ a first active axis of rotation (8), formed for being in torque-transmitting operative connection with the first element (41),
∘ a first non-uniformly translating gearing stage (12) between the drive axis (3) and the first active axis of rotation (8),
∘ a second active axis of rotation (10), formed for being in torque-transmitting operative connection with the second element (42),
∘ a second non-uniformly translating gearing stage (13) between the drive axis (3) and the second active axis of rotation (10),
• wherein the first barrier element (41) and the second barrier element (42), which are each formed as turnstile leaves, are rotatably supported about a common output axis (22), and are torque-transmitting connected to a respective one of the active axes of rotation (8, 10) of the gearing device (1).

## Revendications

1. Utilisation d'un dispositif d'engrenage (1) permettant de déplacer de manière discontinue au moins un premier élément, en particulier un premier élément de barrière (41), et un second élément, en particulier un second élément de barrière (42), d'un dispositif de passage (40), dans le dispositif de passage (40), en particulier
• dans une barrière tripode (40) permettant de déplacer les éléments de barrière, formés comme des montants de barrière de la barrière tripode, ou
• dans un tourniquet permettant de déplacer les éléments de barrière, formés comme des battants de tourniquet, ou
• dans une porte tournante permettant de déplacer les éléments de barrière, formés comme des battants de porte tournante de la porte tournante, ou
• dans une porte pivotante à deux battants permettant de déplacer les éléments de barrière, formés comme des battants de porte de la porte pivotante,
• dans laquelle le dispositif d'engrenage (1) comprend :
• un axe d'entraînement (3),
• un premier axe de rotation actif (8) formé pour une liaison fonctionnelle de transmission de couple au premier élément, en particulier le premier élément de barrière (41),
• un premier étage d'engrenage à translation non uniforme (12) entre l'axe d'entraînement (3) et le premier axe de rotation actif (8),
• un second axe de rotation actif (10) formé pour une liaison fonctionnelle de transmission de couple au second élément, en particulier le second élément de barrière (42),
• un second étage d'engrenage à translation non uniforme (13) entre l'axe d'entraînement (3) et le second axe de rotation actif (10).

2. Utilisation selon la revendication 1,
• dans laquelle le premier étage d'engrenage (12) comporte une première courbe de translation, définie comme le rapport de translation sur l'angle de rotation de l'axe d'entraînement (3),
• dans laquelle le second étage d'engrenage (13) comprend une seconde courbe de translation, définie comme le rapport de translation sur l'angle de rotation de l'axe d'entraînement (3),
• et dans laquelle la première courbe de translation du premier étage d'engrenage (12) et la seconde courbe de translation du second étage d'engrenage (13) sont identiques, cependant, décalées les unes par rapport aux autres, de préférence de 180° par rapport à l'angle de rotation de l'axe d'entraînement (3).

3. Utilisation selon l'une quelconque des revendications précédentes,
• dans laquelle une roue d'entraînement (7), en particulier une roue dentée d'entraînement, est disposée sur l'axe d'entraînement (3),
• dans laquelle sur le premier axe actif de rotation (8) est disposée une première roue d'axe de rotation (9), en particulier une roue dentée d'axe de rotation, qui est en liaison fonctionnelle de transmission de couple avec la roue d'entraînement (7), en particulier en contact ou en prise, permettant de former le premier étage de transmission (12),
• dans laquelle sur le second axe de rotation actif (10) est disposée une seconde roue d'axe de rotation (11), en particulier une roue dentée d'axe de rotation, qui est en liaison fonctionnelle de transmission de couple avec la roue d'entraînement (7), en particulier en contact ou en prise, permettant de former le second étage d'engrenage (13).

4. Utilisation selon la revendication 3, dans laquelle la roue d'entraînement (7) et les roues d'axe de rotation (9, 11) ont des courbes de roulement non rondes respectives (30, 30').

5. Utilisation selon la revendication 3 ou 4, dans laquelle les courbes de roulement (30) des deux roues d'axe de rotation (9, 11) sont les mêmes.

6. Utilisation selon la revendication 4 ou 5, dans laquelle les courbes de roulement (30) des roues d'axe de rotation (9, 11) et la courbe de roulement (30') de la roue d'entraînement (7) sont différentes ou identiques.

7. Utilisation selon l'une quelconque des revendications 3 à 6,
• dans laquelle la première roue d'axe de rotation (9) a un premier rayon effectif variable en fonction de la rotation (r1) et, la roue d'entraînement (7) a un rayon d'entraînement variable en fonction de la rotation (rA) associé à la première roue d'axe de rotation (9), dans laquelle la somme du premier rayon effectif (r1) et du rayon d'entraînement (rA) est constante pendant une rotation de la roue d'entraînement (7),
• et/ou dans laquelle la seconde roue d'axe de rotation (11) a un second rayon effectif variable en fonction de la rotation (r2) et la roue d'entraînement (7) a un rayon d'entraînement variable en fonction de la rotation (rA') associé à la seconde roue d'axe de rotation (11), dans laquelle la somme du second rayon effectif (r2) et du rayon d'entraînement (rA) est constante pendant une rotation de la roue d'entraînement (7).

8. Utilisation selon l'une quelconque des revendications 4 à 7,
• dans laquelle, par rapport à un axe de symétrie respectif (31), les roues d'axe de rotation (9, 11) et la roue d'entraînement (7) sont symétriques, en particulier convexes, et selon l'axe de symétrie respectif (31), ont une longueur (32, 32') et, verticalement à l'axe de symétrie (31), ont une largeur (33, 33'),
• et dans laquelle l'axe de rotation actif (8, 10) est situé sur l'axe de symétrie (31) de la roue d'axe de rotation associée (9, 11) et/ou l'axe d'entraînement (3) est situé sur l'axe de symétrie (31) de la roue d'entraînement (7).

9. Utilisation selon la revendication 7 ou 8,
• dans laquelle la longueur (32) des roues d'axe de rotation (9, 11) est respectivement supérieure à la largeur (33) des roues d'axe de rotation (9, 11),
• et/ou dans laquelle la longueur (32') de la roue d'entraînement (7) est inférieure à la largeur (33') de la roue d'entraînement (7).

10. Utilisation selon l'une quelconque des revendications précédentes, dans laquelle le dispositif d'engrenage comprend
• un arbre de sortie creux (21) pour la liaison résistante au couple avec le premier élément, en particulier le premier élément de barrière (41), dans laquelle le premier axe de rotation actif (8) est en liaison fonctionnelle de transmission de couple avec l'arbre de sortie creux (21) par l'intermédiaire d'un troisième étage de transmission (15),
• et un arbre de sortie (20), qui est au moins partiellement disposé dans l'arbre de sortie creux (21), pour la liaison résistante au couple avec le second élément, en particulier le second élément de barrière (42), dans laquelle le second axe de rotation actif (10) est en liaison fonctionnelle de transmission de couple avec l'arbre de sortie (20) par l'intermédiaire d'un troisième étage de transmission (17).

11. Utilisation selon la revendication 10, dans laquelle le dispositif d'engrenage comprend
• permettant de transmettre le couple, une première roue folle (14) reliée, en particulier résistant au couple, à la première roue d'axe de rotation (9) et en liaison fonctionnelle de transmission de couple, en particulier en contact ou en prise, avec l'arbre de sortie creux (21),
• et permettant de transmettre le couple, une seconde roue folle (16) reliée, en particulier résistant au couple, à la seconde roue d'axe de rotation (11) et en liaison fonctionnelle de transmission de couple, en particulier en contact ou en prise, avec l'arbre de sortie (20).

12. Utilisation selon l'une quelconque des revendications précédentes, dans laquelle le dispositif d'engrenage comprend : un moteur électrique (4) relié à l'axe d'entraînement (3) et/ou un dispositif d'amortissement relié à l'axe d'entraînement (3) et/ou un couplage relié à l'axe d'entraînement (3) et/ou un frein relié à l'axe d'entraînement (3).

13. Barrière tripode (40) permettant de contrôler l'accès et/ou la singularisation, comprenant un premier élément de barrière (41) et un second élément de barrière (42) ainsi qu'un dispositif d'engrenage (1), dans laquelle le dispositif d'engrenage (1) comprend :
• un axe d'entraînement (3),
∘ un premier axe de rotation actif (8), formé pour être en liaison fonctionnelle de transmission de couple avec le premier élément (41),
∘ un premier étage d'engrenage à translation non uniforme (12) entre l'axe d'entraînement (3) et le premier axe de rotation actif (8),
∘ un second axe de rotation actif (10), formé pour être en liaison fonctionnelle de transmission de couple avec le second élément (42),
∘ un second étage d'engrenage à translation non uniforme (13) entre l'axe d'entraînement (3) et le second axe de rotation actif (10),
• dans laquelle le premier élément de barrière (41) et le second élément de barrière (42), qui sont chacun formés comme des montants de barrière, sont supportés en rotation autour d'un axe de sortie commun (22), et sont reliés par transmission de couple à l'un respectif des axes de rotation actifs (8, 10) du dispositif d'engrenage (1).

14. Tourniquet permettant de contrôler l'accès et/ou la singularisation, comprenant un premier élément de barrière (41) et un second élément de barrière (42) ainsi qu'un dispositif d'engrenage (1),
• dans lequel le dispositif d'engrenage (1) comprend :
∘ un axe d'entraînement (3),
∘ un premier axe de rotation actif (8), formé pour être en liaison fonctionnelle de transmission de couple avec le premier élément (41),
∘ un premier étage d'engrenage à translation non uniforme (12) entre l'axe d'entraînement (3) et le premier axe de rotation actif (8),
∘ un second axe de rotation actif (10), formé pour être en liaison fonctionnelle de transmission de couple avec le second élément (42),
∘ un second étage d'engrenage à translation non uniforme (13) entre l'axe d'entraînement (3) et le second axe de rotation actif (10),
• dans lequel le premier élément de barrière (41) et le second élément de barrière (42), qui sont chacun formés de feuilles de tourniquet, sont supportés en rotation autour d'un axe de sortie commun (22), et sont reliés par transmission de couple à l'un respectif des axes de rotation actifs (8, 10) du dispositif d'engrenage (1).
